# EUROPEAN PATENT APPLICATION

(11) **EP 4 539 437 A1**
(43) Date of publication of application: **16.04.2025**
(21) Application number: 23830359.8
(22) Date of filing: 28.06.2023
(51) Int. Cl.: H04L 69/06

(54) **METHOD FOR FLEXIBLE ETHERNET, AND NETWORK DEVICE AND STORAGE MEDIUM**

(30) Priority: 01.07.2022 CN 202210774910
(71) Applicant: Huawei Technologies Co., Ltd., Shenzhen, Guangdong 518129 (CN)
(72) Inventor: WANG, Yu, Shenzhen, Guangdong 518129 (CN)
(74) Representative: Gill Jennings & Every LLP
(86) International application number: PCT/CN2023/103339
(87) International publication number: WO 2024/002188

(57) **Abstract**

Embodiments of this disclosure provide a method for flexible Ethernet FlexE, a network device, a computer-readable storage medium, and a computer program product. In the method, for a to-be-generated code block set, a network device determines a corresponding first payload block set obtained by removing an alignment marker block from the code block set. If the network device determines that the first payload block set needs to include a pad block, the network device determines a location of the pad block in the first payload block set. The network device determines a location of the pad block in the code block set based on the location of the pad block in the first payload block set. In this way, an overhead processing manner of a physical PHY layer of flexible Ethernet FlexE is improved and optimized in embodiments of this disclosure.

## Description

This application claims priority to Chinese Patent Application No. 202210774910.X, filed with the China National Intellectual Property Administration on July 1, 2022 and entitled "METHOD FOR FLEXIBLE ETHERNET, NETWORK DEVICE, AND STORAGE MEDIUM", which is incorporated herein by reference in its entirety.

### TECHNICAL FIELD

The present disclosure generally relates to the field of information technologies, and more particularly to a method for flexible Ethernet FlexE, a network device, a computer-readable storage medium, and a computer program product.

### BACKGROUND

A FlexE technology is a low-cost and high-reliability carrier-class interface technology that is implemented based on a high-speed Ethernet (English: Ethernet) interface by decoupling an Ethernet media access control (English: Media Access Control, MAC) layer and a physical layer. In the FlexE technology, a flexible Ethernet shim (English: FlexE shim) layer is introduced according to IEEE 802.3, to decouple the MAC layer and the physical layer. Therefore, flexible rate matching is implemented.

The FlexE technology uses functions of bonding a plurality of Ethernet physical layer devices (referred to as a PHY below for short) into a flexible Ethernet group (English: FlexE group) and channelization of a physical layer to meet application requirements of a port for a flexible bandwidth. Therefore, MAC rates provided by FlexE may be greater than (through bonding) or less than (through channelization) single PHY rates. However, there is still a need for continuous improvement and optimization for the current FlexE technology in various aspects.

### SUMMARY

Embodiments of this disclosure relate to a technical solution for improving and optimizing overhead processing in a FlexE technology, and specifically provide a method for flexible Ethernet FlexE, a network device, a computer-readable storage medium, and a computer program product.

According to a first aspect of this disclosure, a method for flexible Ethernet FlexE is provided. In the method, for a to-be-generated code block set, a network device determines a corresponding first payload block set obtained by removing an alignment marker block from the code block set. If the network device determines that the first payload block set needs to include a pad block, the network device determines a location of the pad block in the first payload block set. The network device determines a location of the pad block in the code block set based on the location of the pad block in the first payload block set. In this way, an overhead processing manner of a physical PHY layer of the flexible Ethernet FlexE is improved and optimized in this embodiment of this disclosure. Specifically, the technical solution in this embodiment of this disclosure can not only improve power, performance, and area (PPA) benefits of a FlexE circuit, but also simplify the FlexE circuit. In addition, the technical solution in this embodiment of this disclosure may further support coverage of a FlexE protocol evolution calculation manner.

In some implementations, the network device may further determine, based on the first payload block set, a corresponding second payload block set obtained by removing the pad block from the first payload block set. If the network device determines that the second payload block set needs to include an overhead block, the network device may determine a location of the overhead block in the second payload block set. The network device may determine a location of the overhead block in the code block set based on the location of the overhead block in the second payload block set. In this way, in this embodiment of this disclosure, FlexE calculation complexity can be greatly reduced, this solution does not depend on a quantity of egress data buses, analysis and traversal are performed without depending on an AM/PAD/OH window calculation coupling scenario, and one set of algorithms are used for all data bus processing, simplifying overhead processing at a FlexE PHY layer. According to this embodiment of this disclosure, bonding of FlexE PHYs of a same type can also be greatly improved, and flexibility of PHY grouping can be improved. A bandwidth is calculated accurately to ensure that no data is lost and to support any data bus egress requirements. In addition, FlexE protocol evolution is supported to improve inheritance of product development.

In some implementations, to determine the location of the overhead block in the code block set, the network device may determine a location of the overhead block in the first payload block set based on the location of the overhead block in the second payload block set. Then, the network device may determine the location of the overhead block in the code block set based on the location of the overhead block in the first payload block set. In this way, the network device can efficiently and accurately determine the location of the overhead block in the to-be-generated code block set.

In some implementations, in a process of determining the first payload block set, if the network device determines that the code block set needs to include the at least one alignment marker block, the network device may determine a location of the at least one alignment marker block in the code block set. The network device may insert the at least one alignment marker block into the code block set based on the location of the at least one alignment marker block in the code block set. Then, the network device may remove the at least one alignment marker block from the code block set, to obtain the first payload block set. In this way, the network device can efficiently and accurately determine payload data that is used for determining whether the pad block is needed and a location of the pad block.

In some implementations, the at least one alignment marker block may include a currently determined alignment marker block or a previously residual alignment marker block. In this way, the network device can more comprehensively take the current and previous alignment marker blocks into consideration for payload calculation. Therefore, calculation accuracy is improved.

In some implementations, in a process of determining the first payload block set, if the network device determines that the code block set does not need to include the alignment marker block, the network device may determine the code block set as the first payload block set. In this way, payload calculation can be simplified.

In some implementations, in a process of determining the second payload block set, if the network device determines that the first payload block set needs to include the at least one pad block, the network device may insert the at least one pad block into the first payload block set based on the location of the at least one pad block in the first payload block set. Then, the network device may remove the at least one pad block from the first payload block set, to obtain the second payload block set. In this way, the network device can efficiently and accurately determine payload data that is used for determining whether the overhead block is needed and a location of the overhead block.

In some implementations, the at least one pad block may include a currently determined pad block or a previously residual pad block. In this way, the network device can more comprehensively consider the current and previous pad blocks in the payload calculation. Therefore, the calculation accuracy is improved.

In some implementations, when determining the second payload block set, if the network device determines that the first payload block set does not need to include the pad block, the network device may determine the first payload block set as the second payload block set. In this way, payload calculation can be simplified.

In some implementations, to determine the location of the pad block in the first payload block set, the network device may determine, in the first payload block set, a quantity of payload blocks before the pad block. In this way, the network device can simply and accurately determine the location of the pad block by using the payload block as a reference.

In some implementations, to determine the location of the pad block in the code block set, the network device may determine the location of the pad block in the code block set based on the quantity of payload blocks before the pad block. In this way, the network device can simply and accurately restore the location of the pad block in the to-be-generated code block set.

In some implementations, the network device may further determine, based on the second payload block set, a corresponding third payload block set obtain by removing the overhead block from the second payload block set. In this way, the network device can simply and accurately determine a current FlexE data bandwidth for transmission after the overheads are removed.

In some implementations, the overhead block includes a currently determined overhead block or a previously residual overhead block. In this way, the network device may more comprehensively consider the current and previous overhead blocks in the payload calculation. Therefore, the calculation accuracy is improved.

In some implementations, if the network device determines that a quantity of payload blocks in the third payload block set is greater than a quantity of buffered data blocks, the network device may further receive a plurality of new data blocks from a client. Then, the network device may insert the buffered data block and at least a part of the plurality of new data blocks into the third payload block set. In this way, the network device controls input of client data based on a bandwidth capability, and efficiency of data block transmission of the network device is improved.

In some implementations, if the network device determines that a remaining part of the new data blocks is not inserted into the third payload block set, the network device may further store the remaining part in a buffer. In this way, data that is not transmitted temporarily is not lost, thereby improving data transmission reliability.

In some implementations, if the network device determines that a quantity of payload blocks in the third payload block set is less than or equal to a quantity of buffered data blocks, the network device may further skip receiving a plurality of new data blocks from a client. Then, the network device may insert at least a part of the buffered data block into the third payload block set. In this way, the network device controls input of client data based on the bandwidth capability, so that no data loss is caused, thereby improving data transmission reliability.

In some implementations, the network device may further generate the code block set based on the location of the at least one alignment marker block in the code block set, the location of the at least one pad block in the code block set, and the location of the at least one overhead block in the code block set. In this way, the network device can accurately and efficiently generate the code block set.

In some implementations, to generate the code block set, the network device may generate a first intermediate code block set, where the first intermediate code block set includes the at least one alignment marker block, and a value of a code block other than the at least one alignment marker block is zero. The network device may generate a second intermediate code block set, where the second intermediate code block set includes the at least one pad block, and a value of a code block other than the at least one pad block is zero. The network device may generate a third intermediate code block set, where the third intermediate code block set includes the at least one overhead block, and a value of a code block other than the at least one overhead block is zero. The network device may generate a fourth intermediate code block set, where the fourth intermediate code block set includes at least one client data block, and a value of a code block other than the at least one client data block is zero. Then, the network device may perform an OR logical operation on the first intermediate code block set, the second intermediate code block set, the third intermediate code block set, and the fourth intermediate code block set, to generate the code block set. In this way, this embodiment of this disclosure provides normalization processing in which MUX of FLEXE PHY AM/PAD/OH/DATA is not limited by a data type and a PHY type, and supports coverage of a FlexE protocol evolution calculation manner.

According to a second aspect of this disclosure, a network device is provided. The network device includes a processor and a memory that stores instructions. When the instructions are executed by the processor, the network device is enabled to perform the method according to any one of the first aspect and the implementations of the first aspect.

According to a third aspect of this disclosure, a computer-readable storage medium is provided. The computer-readable storage medium stores instructions, and when the instructions are executed by an electronic device, the electronic device is enabled to perform the method according to any one of the first aspect and the implementations of the first aspect.

According to a fourth aspect of this disclosure, a computer program product is provided. The computer program product includes instructions, and when the instructions are executed by an electronic device, the electronic device is enabled to perform the method according to any one of the first aspect and the implementations of the first aspect.

It should be understood that the content described in the summary is not intended to limit a key or important feature of this disclosure, and is not intended to limit the scope of this disclosure. The following descriptions facilitate understanding of other features of this disclosure.

### BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, same or similar reference numerals represent same or similar elements.
FIG. 1A is a diagram of a FlexE transmission mode in which an embodiment of this disclosure may be implemented;
FIG. 1B is a diagram of a network hierarchy of a FlexE technology in which an embodiment of this disclosure may be implemented;
FIG. 1C is a diagram of an application scenario of a FlexE communication system in which an embodiment of this disclosure may be implemented;
FIG. 1D is a diagram of data transmission of a FlexE communication system in which an embodiment of this disclosure may be implemented;
FIG. 1E is a diagram of a FlexE device architecture in which an embodiment of this disclosure may be implemented;
FIG. 1F is a diagram of various overhead combinations that may need to be processed according to an embodiment of this disclosure;
FIG. 2 is a flowchart of an example method for determining a location of a pad block in a code block set by a network device according to an embodiment of this disclosure;
FIG. 3 is a diagram of an insertion process of inserting an alignment marker block and a pad block into a code block set according to an embodiment of this disclosure;
FIG. 4 is a flowchart of an example method for determining a location of an overhead block in a code block set by a network device according to an embodiment of this disclosure;
FIG. 5 is a diagram of an insertion process of inserting an alignment marker block, a pad block, and an overhead block into a code block set according to an embodiment of this disclosure;
FIG. 6 is a flowchart of an example method for obtaining a first payload block set by a network device after an alignment marker block is removed according to an embodiment of this disclosure;
FIG. 7 is a flowchart of an example method for obtaining a second payload block set by a network device after a pad block is removed according to an embodiment of this disclosure;
FIG. 8 is a diagram of an example process of calculating a data bandwidth according to an embodiment of this disclosure;
FIG. 9 is a flowchart of an example method of comparing a quantity of payload blocks with a quantity of buffered data blocks by a network device according to an embodiment of this disclosure;
FIG. 10 is a flowchart of an example method for generating a code block set by a network device according to an embodiment of this disclosure;
FIG. 11 is a diagram of an example process of generating egress data by a network device according to an embodiment of this disclosure; and
FIG. 12 is a simplified block diagram of a device suitable for implementing an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof should be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

It should be understood that in the technical solutions provided in embodiments of this application, some repeated parts may not be described again in the following descriptions of specific embodiments, but it should be considered that these specific embodiments are mutually referenced and may be combined.

As mentioned above, there is still a need for continuous improvement and optimization for the current FlexE technology in various aspects. For example, a FlexE physical (PHY) layer generally receives a bandwidth control signal based on configurations of a PHY type, and a data bus width of the bandwidth control signal may be fixed. Usually, a FlexE PHY calculates insertion of various overheads based on bandwidth control, for example, a current alignment marker (alignment marker, AM) window, a padding (PAD) window, and an overhead (overhead, OH) window. In the AM window, a protocol-specified quantity of AM overheads is inserted when a protocol value is reached. Calculation of the AM window is generally performing cumulative addition (or cumulative subtraction) on the amount of remaining data by removing AM overheads. In the PAD window, a protocol-specified quantity of PAD overheads is inserted when a protocol value is reached. The PAD window needs to remove the AM overheads and PAD overheads, and perform cumulative addition (or cumulative subtraction) on the amount of remaining data. In the OH window, a protocol-specified quantity of OH overheads is inserted when a protocol value is reached. The OH window needs to remove the AM overheads, the PAD overheads, and OH overheads, and perform cumulative addition (or cumulative subtraction) on the amount of remaining data.

Therefore, processing of AM/PAD/OH overhead windows exists at a PHY layer of a FlexE protocol. Quantities of buses of data are different, and a quantity of inserted AMs, PADs, and OHs are different. In this case, a specific bandwidth is occupied. However, client (client) data is output in a fixed manner. It can be learned that the PHY layer needs to control output of the client data to ensure data continuity and integrity. Therefore, the PHY layer needs to calculate an overhead bandwidth to control the output of the client data, to control a bandwidth on the client side, so as to ensure good matching between an egress bandwidth and client bandwidth. A current AM/PAD/OH calculation manner is a combination-based calculation manner. All scenarios of combination of AM, PAD, and OH window counters need to be traversed to find AM, PAD, and OH overhead locations, and the AM, PAD, and OH window counters need to be maintained. This solution has a plurality of problems: 1. there are many scenarios to be analyzed, and positive scenario analysis is not effective or comprehensive enough such that some scenarios may be omitted, resulting in high implementation risks; 2. a circuit designed according to the solution is complex, has high implementation costs and high costs in time sequence, power consumption; and 3. a design corresponding to the foregoing solution has poor inheritance such that new scenarios need to be sorted out in the case of changes in bus bit widths or specification. Therefore, this solution has poor inheritance and low efficiency.

To resolve at least some of the above technical problems and other potential technical problems, embodiments of this disclosure provide a technical solution for improving and optimizing overhead processing in a FlexE technology. The technical solution in embodiments of this disclosure can not only improve power, performance, and area (PPA) benefits of a FlexE circuit, but also simplify the FlexE circuit. In addition, the technical solution in embodiments of this disclosure may further support coverage of a FlexE protocol evolution calculation manner. In conclusion, an overhead processing manner of a physical PHY layer of the flexible Ethernet FlexE is improved and optimized in embodiments of this disclosure. Some illustrative embodiments of this disclosure are described below with reference to the accompanying drawings.

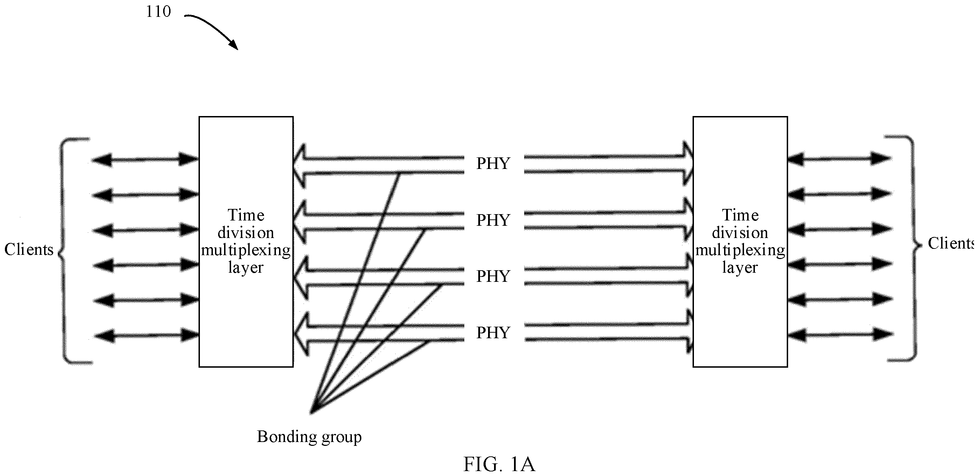

FIG. 1A is a diagram of a FlexE transmission mode 110 in which an embodiment of this disclosure may be implemented. As shown in FIG. 1A, based on a conventional Ethernet, concepts such as a FlexE link group (FlexE Group), a client side or client (client), and a flexible Ethernet time division multiplexing layer (FlexE shim, "time division multiplexing layer" for short below) are introduced to the FlexE. For ease of understanding of the technical solutions in this disclosure, the concepts in this disclosure are first briefly described.

FlexE link group: The FlexE link group may also be referred to as a bonding group, and the FlexE link group may be explained as a function module including a plurality of physical (physical, PHY) layers. The FlexE link group in this disclosure includes at least one link. For example, the FlexE link group may include 1 to 254 PHYs that support a rate of 100 gigabit Ethernet (gigabit Ethernet, GE). The PHY may be defined as mechanical, electronic, functional, and normative features provided for establishing, maintaining, and removing a physical link required for data transmission. The PHY may also be defined as a module having the foregoing features. For example, PHYs may be physical layer working components at a transceiver and a receiver and an optical fiber located between the transceiver and the receiver. For example, the physical layer working components are physical layer interface devices.

Generally, a plurality of PHYs (that is, links) included in each FlexE link group have a logical bonding relationship. The logical bonding relationship means that there may be no physical connection relationship between different PHYs. Therefore, the plurality of PHYs in the FlexE link group may be physically independent. A network device in FlexE may identify, by using numbers of PHYs, links included in one FlexE link group, to implement logical bonding of the plurality of PHYs. For example, each PHY number may be identified by a number ranging from 1 to 254, and 0 and 255 are reserved numbers. One PHY number may correspond to one port on the network device. Two adjacent network devices need to use a same number to identify a same PHY. Numbers of PHYs included in one FlexE link group do not need to be consecutive. Usually, there is one FlexE link group between two network devices. However, in this disclosure, it is not limited that there is only one FlexE link group between two network devices. In other words, there may be a plurality of FlexE link groups between two network devices. One PHY may be used to carry at least one client, and one client may be transmitted on at least one PHY.

Client: A client may also be referred to as a client side or a client service. A client can be interpreted as an Ethernet flow based on a physical address. Clients that are sent over a same bonding group need to share a same clock, and these clients need to be adapted based on allocated slot rates. A bandwidth overhead of each client may be adapted by inserting/deleting an idle (idle) block. An identifier of a client is referred to as ClientID or a client identifier.

Time division multiplexing layer: Its main function is to slice data based on a same clock, encapsulate sliced data into slots (slot) obtained through pre-division. Then, each slot obtained through division is mapped, based on a preconfigured slot configuration table, to a PHY in a bonding group for transmission. Each slot is mapped to one PHY in the bonding group.

FlexE transmits data based on a time division multiplexing (time division multiplexing, TDM) technology. An Ethernet packet is encoded, at a physical coding sublayer, into 64B/66B code blocks (where "B" is short for "bit"), and these code blocks are mapped to a plurality of different PHYs based on slots. FlexE data described in this disclosure may also be referred to as a code block or a coding block. As described above, Ethernet packets are encoded into the 64B/66B code blocks (where "B" is short for "bit") at the physical coding sublayer, and these code blocks are mapped to the plurality of different PHYs based on the slots. Certainly, it is not limited that a code block has a size of 64B/66B in embodiments of this disclosure, and any code block of another coding scheme and size is equivalently applicable to embodiments of this disclosure.

For a related FlexE technology in this disclosure, refer to related descriptions of the FlexE standard IA OIF-FLEXE-01.0 or IA OIF-FLEXE-02.0 formulated by the Optical Internetworking Forum (English: Optical Internetworking Forum, OIF). The foregoing standard is incorporated into this disclosure by reference in its entirety.

In Ethernet, an Ethernet port is usually a logical data-oriented concept, which is referred to as a logical port or is briefly referred to as a port, and an Ethernet physical interface is a hardware concept, which is referred to as a physical interface or is briefly referred to as an interface. Usually, a MAC address is used to identify an Ethernet port. Conventionally, a rate of an Ethernet port is determined based on a rate of an Ethernet physical interface. Usually, a maximum bandwidth of an Ethernet port corresponds to a bandwidth of an Ethernet physical interface, such as an Ethernet physical interface of 10 megabits per second (megabits per second, Mbps), 100 Mbps, 1000 Mbps (1 Gbps), 10 Gbps, 40 Gbps, 100 Gbps, or 400 Gbps.

Ethernet has been widely applied and developed in the past quite a period of time. A rate of an Ethernet port achieves a 10x increase from 10 Mbps to 100 Mbps, 1000 Mbps (1 Gbps), 10 Gbps, 40 Gbps, 100 Gbps, and 400 Gbps. As technologies further develop, a difference between bandwidth granularities becomes larger, prone to cause a deviation from an actual application requirement expectation. Bandwidth required by a mainstream application does not increase in a manner of 10x increase. For example, the bandwidth required by the mainstream application increases from 50 Gbps to 75 Gbps, 200 Gbps, and the like. It is expected in the industry that an Ethernet port (virtual connection) of bandwidths such as 50 Gbps, 60 Gbps, 75 Gbps, 200 Gbps, and 150 Gbps is supported.

Further, it is expected that some flexible-bandwidth ports can be provided, and these ports may share one or several Ethernet physical interfaces. For example, two 40 GE ports and two 10 GE ports share one 100G physical interface. In addition, a rate can be flexibly adjusted as requirements change, for example, adjusted from 200 Gbps to 330 Gbps, or from 50 Gbps to 20 Gbps, to improve utilization efficiency of a port or extend a port life cycle. Fixed-rate physical links may be cascaded and bonded to support a stack-based increase of a logical port rate (for example, two 100 GE physical interfaces are stacked, cascaded, and bonded to support a 200 GE logical port). In addition, a bandwidth obtained by flexibly stacking physical interfaces can be used as a resource pool, and the bandwidth in the resource pool is allocated to a particular Ethernet logical port based on a granularity (for example, at a granularity of 5G), so that several Ethernet virtual connections can efficiently share a physical link group obtained through stacking and cascading.

Therefore, the concept of FlexE rises to the occasion. Flexible Ethernet is also referred to as flexible virtual Ethernet. FlexE supports functions such as sub-rating, channelization, and inverse multiplexing of an Ethernet service. For example, in a sub-rating application scenario of an Ethernet service, FlexE can support transmission of a 250G Ethernet service (a MAC bitstream) by using three channels of existing 100 GE physical interfaces. In an inverse multiplexing scenario of an Ethernet service, FlexE can support transmission of a 200G Ethernet service by using two channels of existing 100 GE physical medium dependent (English: Physical Medium Dependent, PMD) sublayers. In a channelization scenario of an Ethernet service, FlexE can support several logical ports in sharing one or more physical interfaces, and can support multiplexing a plurality of low-rate Ethernet services into high-rate flexible Ethernet.

Because Ethernet is widely used as a service interface in an access network and a metropolitan area network, such a FlexE technology based on a service traffic aggregation function of an Ethernet technology can implement a seamless connection to an Ethernet interface of an underlying service network. Introduction of these functions such as sub-rating, channelization, and inverse multiplexing of FlexE greatly expands application scenarios of Ethernet, improves application flexibility of Ethernet, and makes the Ethernet technology gradually penetrate into a field of a transport network.

FlexE provides a feasible evolution direction for virtualization of an Ethernet physical link. Flexible Ethernet needs to support several virtual Ethernet data connections on a group of cascaded physical interfaces. For example, four 100 GE physical interfaces are cascaded and bonded to support several logical ports. If bandwidths of some of the logical ports decrease, bandwidths of the other logical ports increase, and a total bandwidth decrease amount is equal to a total bandwidth increase amount. The bandwidths of the logical ports are rapidly and flexibly adjusted, and the logical ports share the four 100 GE physical interfaces.

With reference to a synchronous digital hierarchy (Synchronous digital hierarchy, SDH)/optical transport network (Optical transfer network, OTN) technology, FlexE constructs a fixed frame format for transmission on a physical interface, and performs TDM slot division. The following uses an existing FlexE frame format as an example for description. A TDM slot division granularity of FlexE is 66 bits, which can exactly carry a 64B/66B bit block correspondingly. One FlexE frame includes eight rows. A FlexE overhead block is at the first 64B/66B bit block location in each row. A payload area in which slot division is performed exists after the overhead block. The payload area uses 66 bits as a granularity, and corresponds to 20 x 1023 pieces of 66-bit carrier space. A bandwidth of a 100 GE interface is divided into 20 slots, and a bandwidth of each slot is approximately 5 Gbps. FlexE implements a plurality of transmission channels on a single physical interface in an interleaved multiplexing manner. In other words, a plurality of slots are implemented.

Several physical interfaces may be bonded, and all slots of the physical interfaces may carry an Ethernet logical port in a combined manner. For example, 10 GE requires two slots, and 25 GE requires five slots. Sequentially transmitted 64B/66B bit blocks are visible on the logical port. Each logical port corresponds to one MAC, and transmits a corresponding Ethernet packet. Identification of a start and an end of the packet and identification of idle padding are the same as those in the conventional Ethernet. FlexE is merely an interface technology, and a related switching technology may be performed based on an existing Ethernet packet, or may be performed based on FlexE in a cross manner. Details are not described here.

The bit block mentioned in this disclosure may be an M1/M2 bit block, or may be referred to as an M1B/M2B bit block. M1/M2 represents a coding scheme, M1 represents a quantity of payload bits in each bit block, M2 represents a total quantity of bits in each bit block, M1 and M2 are positive integers, and M2 > M1. Such an M1/M2 bit block stream is transferred on Ethernet physical layer link. For example, 1G Ethernet uses 8/10Bit coding, and an 8/10 bit block stream is transferred on a 1 GE physical layer link; 10 GE/40 GE/100 GE uses 64/66Bit coding, and a 64/66 bit block stream is transferred on a 10 GE/40 GE/100 GE physical layer link. In the future, other coding schemes may further occur with the development of the Ethernet technology. For example, 128/130Bit coding, 256/258Bit coding, and the like may occur. For the M1/M2 bit block stream, there are different types of bit blocks and specifications are specified in the standard. The following uses a code pattern definition of 64/66Bit coding as an example for description.

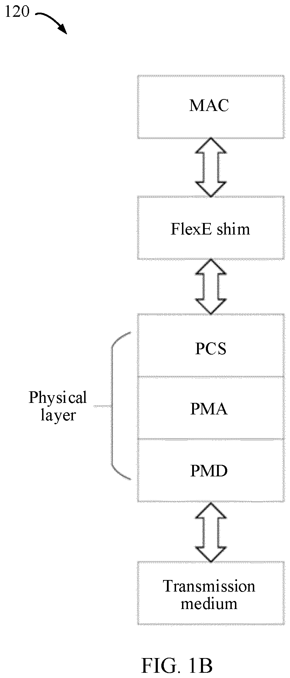

FIG. 1B is a diagram of a network hierarchy 120 of a FlexE technology in which an embodiment of this disclosure may be implemented. In the FlexE technology, a FlexE shim layer is introduced according to IEEE 802.3, to decouple a MAC layer and a physical layer, as shown in FIG. 1B. Therefore, flexible rate matching is implemented. As shown in FIG. 1B, a partial architecture of the FlexE includes a medium access control (medium access control, MAC) sublayer, a time division multiplexing layer, and a physical layer. The MAC sublayer is a sublayer of a data link layer, and is connected to a logical link control sublayer in the upstream. The physical layer may be further divided into a physical coding sublayer (physical coding sublayer, PCS), a physical medium attachment (physical medium attachment, PMA) sublayer, and a physical medium dependent (physical medium dependent, PMD) sublayer. The MAC sublayer is connected to the time division multiplexing layer by using a medium independent interface (medium independent interface, MII), and the time division multiplexing layer is connected to the physical layer by using a medium independent interface. The physical layer is connected to a transmission medium in the downstream. The physical layer is connected to the transmission medium by using a medium dependent interface (medium dependent interface, MDI). Functions of the foregoing layers and interfaces are implemented by corresponding chips or modules. For example, functions corresponding to the PCS, the PMA sublayer, and the PMD sublayer may be separately implemented by different PHYs.

In a signal sending process, the PCS is configured to perform operations, for example, encoding, scrambling (scrambled), overhead (overhead OH) inserting, and alignment label or alignment marker (alignment marker, AM) inserting, on the data. In a signal receiving process, the PCS performs reverse processing processes of the foregoing steps. Signals may be sent and received by different function modules of the PCS. Main functions of the PMA sublayer are link monitoring, carrier monitoring, encoding and decoding, sending clock synthesis, and receiving clock recovery. Main functions of the PMD sublayer are scrambling/descrambling and encoding/decoding a data stream, and performing direct current restoration and adaptive equalization on a received signal. It should be understood that the foregoing architecture is merely an example for description, and an architecture applicable to FlexE in this disclosure is not limited thereto. For example, there may be a reconciliation sublayer (reconciliation sublayer, RS) between the MAC sublayer and the time division multiplexing layer, and the reconciliation sublayer is used for providing a signal mapping mechanism between the MII and the MAC sublayer. A forward error correction (forward error correction, FEC) sublayer may further exist between the PCS and the PMA sublayer, to enhance reliability of sent data.

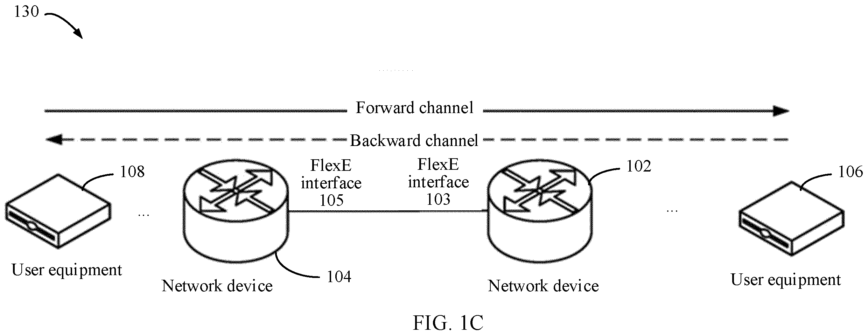

FIG. 1C is a diagram of an application scenario 130 of a FlexE communication system in which an embodiment of this disclosure may be implemented. As shown in FIG. 1C, the FlexE communication system 100 includes a network device 102, a network device 104, a user equipment 106, and a user equipment 108. The network device 102 may be an intermediate node. In this case, the network device 102 is connected to the user equipment 106 through another network device. The network device 102 may be an edge node. In this case, the network device 102 is directly connected to the user equipment 106. The network device 104 may be an intermediate node. In this case, the network device 104 is connected to the user equipment 108 through another network device. Alternatively, the network device 104 may be an edge node. In this case, the network device 104 is directly connected to the user equipment 108. The network device 102 includes a FlexE interface 103, and the network device 104 includes a FlexE interface 105. The FlexE interface 103 is adjacent to the FlexE interface 105. Usually, each FlexE interface includes a transmit port and a receive port. A difference from a conventional Ethernet interface lies in that one FlexE interface may carry a plurality of clients, and a FlexE interface used as a logical interface may include a plurality of physical interfaces. A flow direction of service data in a forward channel shown in FIG. 1C is shown by a solid line arrow in FIG. 1C, and a flow direction of service data in a backward channel is shown by a dashed line arrow in FIG. 1C. A forward channel is used as an example of a transmission channel in embodiments of this disclosure, and a flow direction of service data in the transmission channel is: user equipment 108-network device 104-network device 102→user equipment 106.

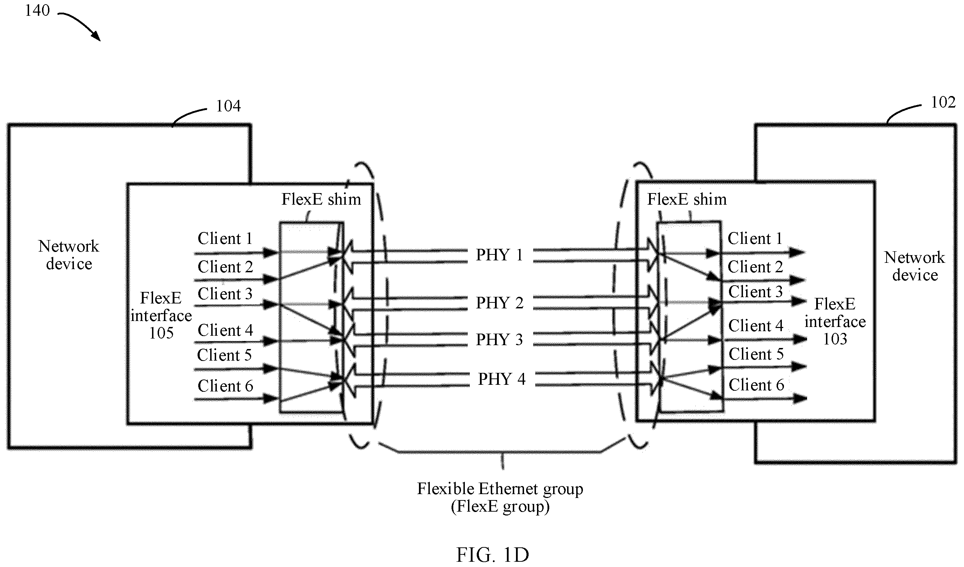

It should be understood that FIG. 1C shows merely an example of two network devices and two user equipments. A network may include any other quantity of network devices and any other quantity of user equipments. This is not limited in embodiments of this disclosure. The FlexE communication system shown in FIG. 1C is merely an example for description. An application scenario of the FlexE communication system provided in this disclosure is not limited to the scenario shown in FIG. 1C. The technical solutions provided in this disclosure are applicable to all network scenarios in which data transmission is performed by using a FlexE technology. With reference to FIG. 1D, the following further describes a process in which the network device 102 and the network device 104 shown in FIG. 1C transmit data by using the FlexE technology.

FIG. 1D is a diagram of data transmission 140 of a FlexE communication system in which an embodiment of this disclosure may be implemented. As shown in FIG. 1D, a PHY 1, a PHY 2, a PHY 3, and a PHY 4 are bonded into a FlexE group. The network device 102 is connected to a network device 104 through FlexE group interfaces, that is, a FlexE interface 103 and a FlexE interface 105. It should be noted that the FlexE group interface may also be referred to as a FlexE interface. The FlexE group interface is a logical interface formed by bonding a group of physical interfaces. The FlexE group interface carries six clients in total: a client 1 to a client 6. Data of the client 1 and the client 2 is mapped to the PHY 1 for transmission, data of the client 3 is mapped to the PHY 2 and the PHY 3 for transmission, data of the client 4 is mapped to the PHY 3 for transmission, and data of the client 5 and the client 6 is mapped to the PHY 4 for transmission. It can be learned that different FlexE clients perform mapping and transmission on a FlexE group, to implement a bonding function.

The FlexE group may also be referred to as a bonding group. A plurality of PHYs included in each FlexE group have a logical bonding relationship. The logical bonding relationship means that there may be no physical connection relationship between different PHYs. Therefore, the plurality of PHYs in the FlexE group may be physically independent of each other. A network device in FlexE may identify, by using numbers of PHYs, PHYs included in one FlexE group, to implement logical bonding of a plurality of PHYs. For example, each PHY number may be identified by a number ranging from 1 to 254, and 0 and 255 are reserved numbers. One PHY number may correspond to one interface on the network device. Two adjacent network devices need to use a same number to identify a same PHY. Numbers of PHYs included in one FlexE group do not need to be consecutive. Usually, there is one FlexE group between two network devices. However, that there is only one FlexE group between two network devices is not limited in this disclosure. In other words, there may be a plurality of FlexE groups between two network devices. One PHY may be used to carry at least one client, and one client may be transmitted on at least one PHY. The PHY includes a physical layer device (device) of a transmitting device and a physical layer device of a receiving device. In addition to a PHY layer apparatus defined in IEEE 802.3, the PHY in the FlexE further includes an apparatus configured to perform functions of a FlexE shim layer. The physical layer device of the transmitting device may also be referred to as a transmitting PHY or a PHY in a sending direction, and the physical layer device of the receiving device may also be referred to as a receiving PHY or a PHY in a receiving direction.

FlexE client: The FlexE client corresponds to various user interfaces of a network, and is consistent with a conventional service interface in an existing IP/Ethernet network. The FlexE client may be flexibly configured based on a bandwidth requirement, and supports Ethernet MAC data streams of various rates (for example, data streams of 10G, 40G, n*25G, and even non-standard rates). For example, the data streams may be transmitted to a FlexE shim layer as 64B/66B coded data streams. The FlexE client may be interpreted as a physical address-based Ethernet flow. Clients sent by a same FlexE group need to share a same clock, and these clients need to perform adaptation based on allocated slot rates.

FlexE shim: The FlexE shim serves as an additional logical layer inserted between a MAC and a PHY (PCS sublayer) in a conventional Ethernet architecture. A core architecture of the FlexE technology is implemented by using a calendar (English: calendar)-based time slot (English: time slot) distribution mechanism. A main function of the FlexE shim layer is to slice data based on a same clock, and encapsulate sliced data into slots (slot) obtained through pre-division. Then, each slot obtained through division is mapped, based on a preconfigured slot configuration table, to a PHY in the FlexE group for transmission. Each slot is mapped to one PHY in the FlexE group.

The FlexE shim layer defines an overhead frame (English: overhead frame)/an overhead multiframe (English: overhead Multiframe), to reflect a calendar-based working mechanism and a mapping relationship between a client and a slot in the FlexE group. It should be noted that the foregoing overhead frame may also be referred to as a flexible Ethernet overhead frame (English: FlexE overhead frame), and the foregoing overhead multiframe may also be referred to as a flexible Ethernet overhead multiframe (English: FlexE overhead Multiframe). The FlexE shim layer provides an inband management channel through overheads, and supports transmission of a configuration and management information between two interconnected FlexE interfaces, to establish a link through automatic negotiation.

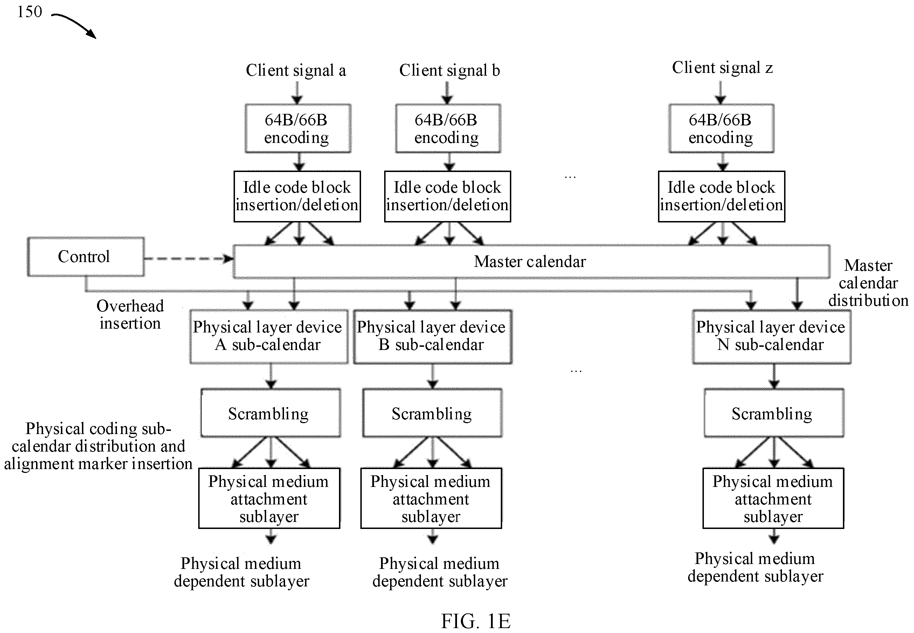

FIG. 1E is a diagram of a FlexE device architecture 150 in which an embodiment of this disclosure may be implemented. As shown in FIG. 1E, the FlexE device architecture includes a FlexE client layer and a FlexE service layer. The FlexE client layer is mainly used to converge one or more client signals, for example, a client signal a, a client signal b, ..., and a client signal z in FIG. 1E. The client signal may come from, for example, an Ethernet interface such as 10G, 25G, 40G, or N*50G. The FlexE service layer may be used to carry a FlexE client signal. The FlexE service layer may be implemented by using N channels of physical layer devices (Physical Layer Devices, PHYs) of 100G, or may be implemented by using N channels of PHYs of 25G, N channels of PHYs of 50G, N channels of PHYs of 200G, N channels of PHYs of 400G, or the like.

Usually, a signal processing process of a FlexE device may include the following steps: After receiving a plurality of client signals, for example, a client signal a, a client signal b, ..., and a client signal z, the FlexE device performs 64B/66B coding on the received plurality of client signals to form 66B code block streams, and performs rate adaptation on the code block streams of the client signals by inserting or deleting an idle (IDLE) code block. The code block streams of the client signals are sent to a master calendar (Master Calendar or Calendar). After master time division layer distribution, the code block streams of the plurality of client signals are distributed to N PHY sub-calendar (sub-Calendar), and a FlexE overhead is inserted into each PHY sub-calendar at a specific interval periodicity (for example, 20 x 1023 x 66B), to identify a FlexE frame structure, identify a sequence of each PHY, or the like. Each PHY sub-calendar is scrambled, and then each PHY sub-calendar is divided into a plurality of physical coding sublayer (Physical Coding Sublayer, PCS) channels. An alignment marker (Alignment Marker, AM) or an alignment code block is inserted into the plurality of physical coding sublayer channels, and the plurality of physical coding sublayer channels to which the alignment marker is inserted are sent to a physical medium attachment (Physical Medium Attachment, PMA) sublayer, and further sent to a physical medium dependent (Physical Medium Dependent, PMD) sublayer.

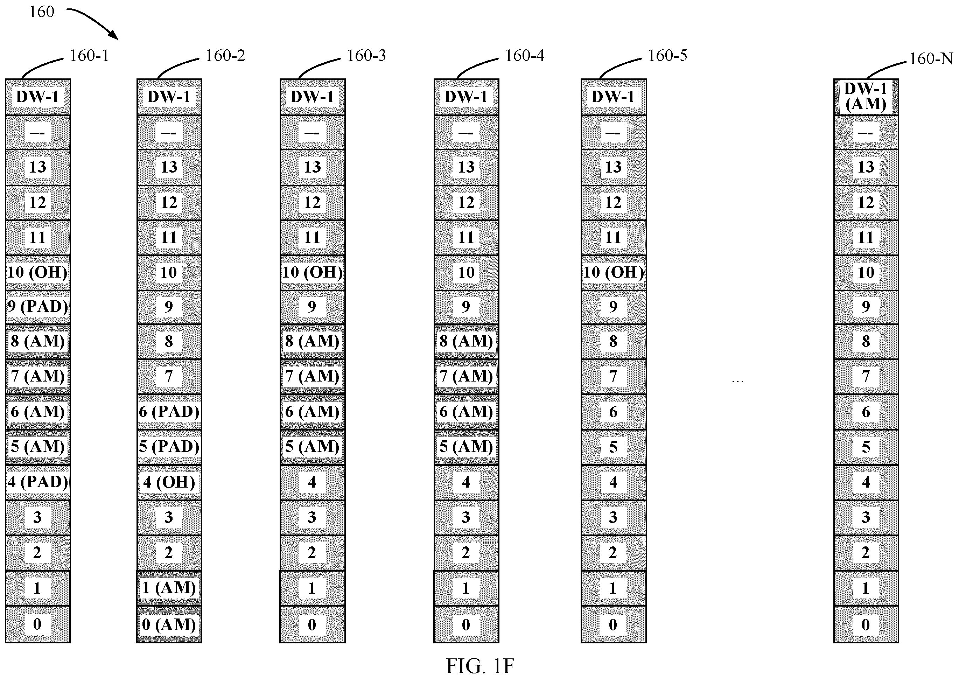

FIG. 1F is a diagram of various overhead combinations 160 that may need to be processed according to an embodiment of this disclosure. According to stipulation of a FlexE protocol, a FlexE PHY calculates insertion of various overheads based on bandwidth control, for example, a current alignment marker (alignment marker, AM) window, a padding (PAD) window, and an overhead (overhead, OH) window. It should be noted that, for definitions, functions, and functions of the three types of overheads and other overheads to which embodiments of this disclosure are applicable, refer to the FlexE standard IA OIF-FLEXE-01.0 or IA OIF-FLEXE-02.0 formulated by the Optical Internetworking Forum (OIF), and a standard to be specified in the future. It should be further noted that the three types of overheads described in this specification are merely examples, and embodiments of this disclosure are equivalently applicable to any other overheads in the FlexE.

As shown in FIG. 1F, under the stipulation of the FlexE protocol, for a set (for example, a code block set 160-1 to 160-N) having a data width DW code blocks, an AM block, a PAD block, an OH block, and a payload data block may be combined in various manners. For example, in the code block set 160-1, code blocks 5 to 7 are AM blocks, code blocks 4 and 9 are PAD blocks, code block 10 is an OH block, and remaining blocks are payload data blocks. In a code block set 160-2, code blocks 0 and 1 are AM blocks, code blocks 5 and 6 are PAD blocks, a code block 4 is an OH block, and remaining blocks are payload data blocks. In the code block set 160-3, code blocks 5 to 8 are AM blocks, code block 10 is an OH block, and remaining blocks are payload data blocks. In the code block set 160-4, code blocks 5 to 8 are AM blocks, and remaining blocks are payload data blocks. In the code block set 160-5, code block 10 is an OH block, remaining blocks are payload data blocks, and the like.

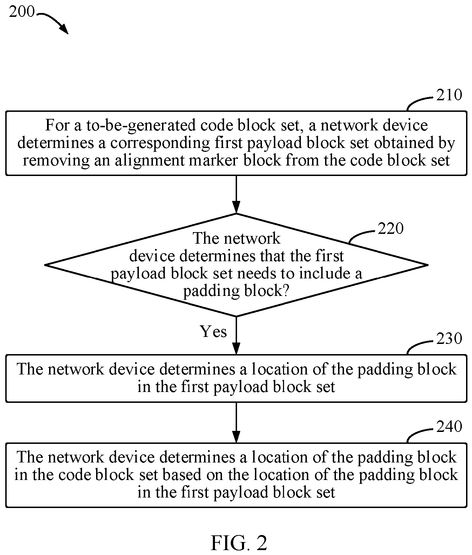

It can be learned that there are many combination scenarios of the AM block, the PAD block, the OH block, and the payload data block. Especially when the data width DW increases, the combination scenario may increase exponentially. If locations of the AM block, the PAD block, and the OH block are found based on a scenario of a combination of the AM block, the PAD block, the OH block, and the payload data block, it is very complex, an implementation risk is high, and design inheritance is poor. On the contrary, in embodiments of this disclosure, FlexE calculation complexity can be greatly reduced, this solution does not depend on a quantity of egress data buses, analysis and traversal are performed without depending on an AM/PAD/OH window calculation coupling scenario, and one set of algorithms are used for all data bus processing, simplifying overhead processing at a FlexE PHY layer. According to embodiments of this disclosure, bonding of FlexE PHYs of a same type can also be greatly improved, and flexibility of PHY grouping can be improved. A bandwidth is calculated accurately to ensure that no data is lost and to support any data bus egress requirements. In addition, FlexE protocol evolution is supported to improve inheritance of product development. The following describes some embodiments of this disclosure in detail with reference to FIG. 2 to FIG. 11.

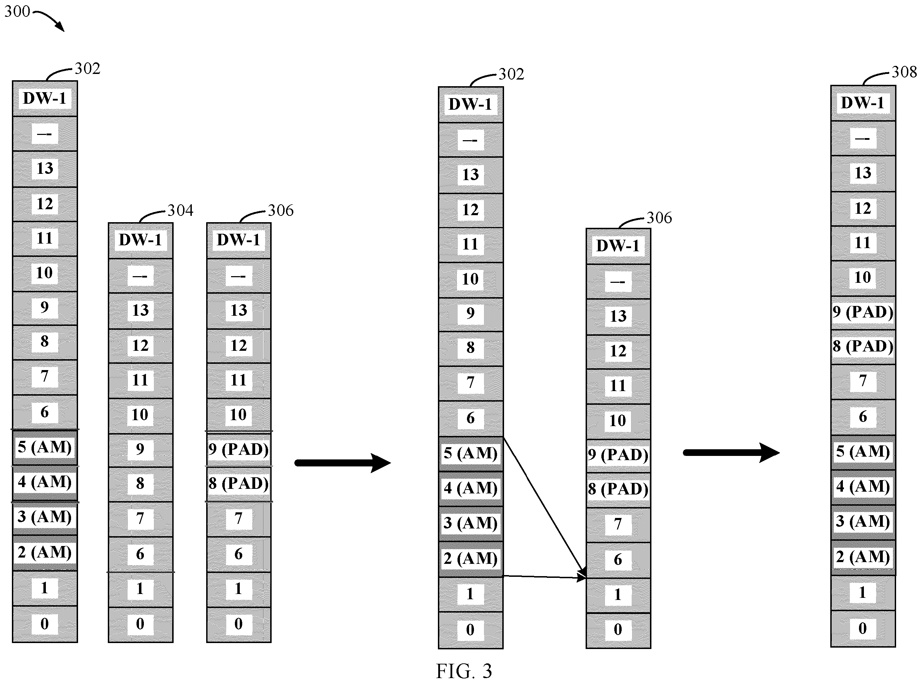

FIG. 2 is a flowchart of an example method 200 for determining a location of a pad block in a code block set by a network device according to an embodiment of this disclosure. In some embodiments, the example method 200 may be implemented by the network device 102 in FIG. 1C and FIG. 1D, for example, may be implemented by a processor or a processing unit of the network device 102 in cooperation with another component (for example, a memory). In other embodiments, the example method 200 may alternatively be implemented by another FlexE device. For ease of description, an example in which the network device 102 performs the example method 200 is used, and the example method 200 is described with reference to FIG. 3. FIG. 3 is a diagram of an insertion process 300 of inserting an alignment marker block and a pad block into a code block set according to an embodiment of this disclosure.

As shown in FIG. 2, at a block 210, for a to-be-generated code block set, the network device 102 determines a corresponding first payload block set by removing an alignment marker (AM) block from the code block set. As used in this specification, the first payload block set may be a payload block set obtained by removing the AM block. It should be noted that, in this case, the to-be-generated code block set has not been generated by the network device 102, but the network device 102 knows a quantity of code blocks that the to-be-generated code block set needs to include, and the quantity of code blocks is generally determined by using a data transmission bandwidth and a size of a data block. To generate the code block set, the network device 102 needs to determine whether the code block set needs to include an overhead block (for example, an AM block, a PAD block, or an OH block). If the code block set needs to include an overhead block, the network device 102 needs to determine a location of the overhead block in the code block set. In an example, for a to-be-generated code block set 308 shown in FIG. 3, the network device 102 may first determine that code blocks 2 to 5 in the to-be-generated code block set 308 need to be set as AM blocks, that is, a code block set 302. Based on this, the network device 102 may determine that a payload block set 304 obtained by removing AM blocks is a code block set obtained by removing the AM blocks 2 to 5, to be specific, code blocks 0 and 1 and code blocks 6 to DW-1.

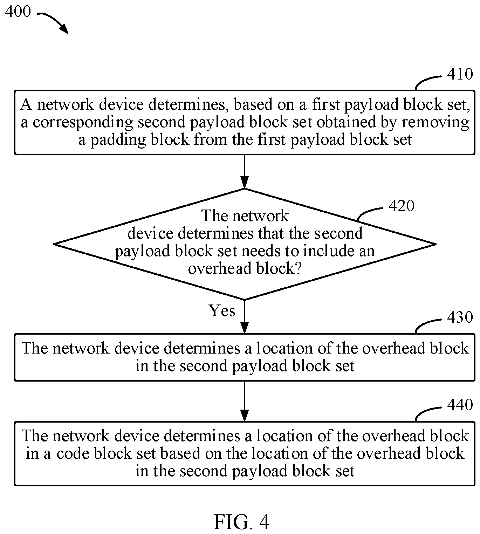

At a block 220, the network device 102 determines whether the first payload block set needs to include a padding (PAD) block. For example, still refer to the example in FIG. 3. The network device 102 may determine, according to a protocol, whether the payload block set 304 needs to include PAD blocks. Refer back to FIG. 2. If the network device 102 determines that the first payload block set needs to include a pad block, at a block 230, the network device 102 determines a location of the pad block in the first payload block set. For example, in the example in FIG. 3, the network device 102 may determine that the payload block set 304 needs to include PAD blocks, and determine locations of the PAD blocks in the payload block set 304. Then, the network device 102 may determine a code block set 306 obtained by inserting the PAD blocks. In some embodiments, the network device 102 may determine, in the first payload block set, a quantity of payload blocks before the pad block. Accordingly, to determine the location of the pad block in the to-be-generated code block set, the network device 102 may determine the location of the pad block in the to-be-generated code block set based on the quantity of payload blocks before the pad block. For example, in the example in FIG. 3, the network device 102 may determine that a quantity of payload blocks before the PAD blocks in the code block set 306 is 4. Accordingly, in the to-be-generated code block 308, the network device 102 may determine locations of the PAD blocks in the code block 308 based on the quantity 4 of payload blocks before the PAD block. In another aspect, at the block 220, if the network device 102 determines that the first payload block set does not need to include the pad block, the network device 102 may skip the block 230 and a block 240 in FIG. 2, and continue to perform actions described in another embodiment of this disclosure. For example, reference is made to subsequent operations of the network device 102 described in FIG. 4 below.

At the block 240, the network device 102 determines the location of the pad block in the to-be-generated code block set based on the location of the pad block in the first payload block set. For example, in the example in FIG. 3, the network device 102 may determine the locations of the PAD blocks in the to-be-generated code block set 308 based on the locations of the PAD blocks in the payload block set 304 (that is, the code block set 306). Then, the network device 102 may determine the code block set 308 obtained by inserting the AM blocks and the PAD blocks. It can be learned that, this embodiment of this disclosure provides a calculation method in which overhead processing at a FlexE PHY layer is normalized, forward calculation and reverse location restoration can be performed, thereby implementing optimal resources. In addition, this embodiment of this disclosure supports coverage of a FlexE protocol evolution calculation manner. The technical solution in this embodiment of this disclosure can not only improve power, performance, and area (PPA) benefits of a FlexE circuit, but also simplify the FlexE circuit. In conclusion, an overhead processing manner of a physical PHY layer of flexible Ethernet FlexE is improved and optimized in this embodiment of this disclosure.

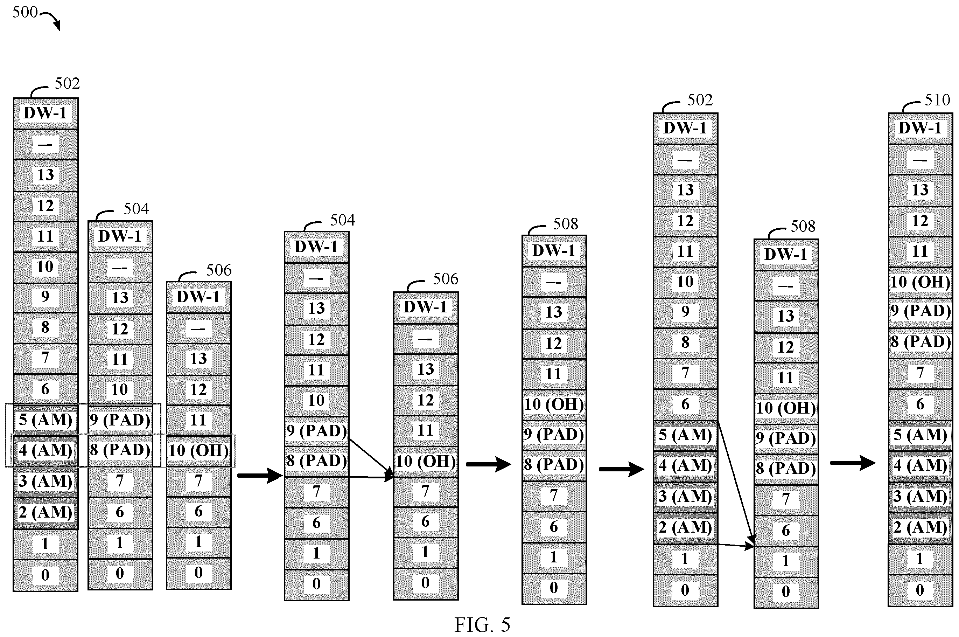

FIG. 4 is a flowchart of an example method 400 for determining a location of an overhead block in a code block set by a network device according to an embodiment of this disclosure. It should be noted that the example method 400 may be further performed based on the example method 200. In some embodiments, the example method 400 may be implemented by the network device 102 in FIG. 1C and FIG. 1D, for example, may be implemented by a processor or a processing unit of the network device 102 in cooperation with another component (for example, a memory). In other embodiments, the example method 400 may alternatively be implemented by another FlexE device. For ease of description, an example in which the network device 102 performs the example method 400 is used, and the example method 400 is described with reference to FIG. 5. FIG. 5 is a diagram of an insertion process 500 of inserting an alignment marker block, a pad block, and an overhead block into a code block set according to an embodiment of this disclosure.

As shown in FIG. 4, at a block 410, the network device 102 may determine, based on the first payload block set, a corresponding second payload block set obtained by removing the pad block from the first payload block set. As used in this specification, the second payload block set may be a payload block set obtained by removing the AM block and the PAD block. In an example, for a to-be-generated code block set 510 shown in FIG. 5, according to a processing manner of the example method 200, the network device 102 may first determine that code blocks 2 to 5 in the to-be-generated code block set 510 need to be set as AM blocks, that is, a code block set 502. Based on this, the network device 102 may determine that a payload block set obtained by removing AM blocks is a code block set obtained by removing the AM blocks 2 to 5, to be specific, code blocks 0 and 1 and code blocks 6 to DW-1. Then, the network device 102 may determine a code block set 504 including pad blocks. Based on this, the network device 102 may determine that a payload block set obtained by removing the pad blocks is the code blocks 0 and 1, the code blocks 6 and 7, and the code blocks 10 to DW-1.

At a block 420, the network device 102 may determine whether the second payload block set needs to include an overhead block. If the network device 102 determines that the second payload block set needs to include the overhead (OH) block, at a block 430, the network device 102 may determine a location of the overhead block in the second payload block set. For example, in the example in FIG. 5, the network device 102 may determine that the payload block set, to be specific, the code blocks 0 and 1, the code blocks 6 and 7, and the code blocks 10 to DW-1, needs to include an OH block, and determine a location of the OH block in the payload block set. Then, the network device 102 may determine a code block set 506 obtained by inserting the OH block. In another aspect, at the block 420, if the network device 102 determines that the second payload block set does not need to include the overhead block, the network device 102 may skip the block 430 and a block 440 in FIG. 4, and continue to perform actions described in another embodiment of this disclosure.

At the block 440, the network device 102 may determine a location of the overhead block in the to-be-generated code block set based on the location of the overhead block in the second payload block set. For example, in the example in FIG. 5, the network device 102 may determine a location of the OH block in the to-be-generated code block set 510 based on the location of the OH block in the payload block set, to be specific, the code blocks 0 and 1, the code blocks 6 and 7, and the code blocks 10 to DW-1. Then, the network device 102 may determine the code block set 510 obtained by inserting the AM blocks, the PAD blocks, and the OH block.

In some embodiments, to determine the location of the overhead block in the to-be-generated code block set, the network device 102 may determine a location of the overhead block in the first payload block set based on the location of the overhead block in the second payload block set. Then, the network device 102 may determine the location of the overhead block in the to-be-generated code block set based on the location of the overhead block in the first payload block set. For example, in the example in FIG. 5, the network device 102 may first determine a location of the OH block in a code block set 508 based on a location of the OH block in the code block set 506. Then, the network device 102 may determine the location of the OH block in the code block set 510 based on the location of the OH block in the code block set 508. Therefore, in some embodiments, the network device 102 may generate the to-be-generated code block set based on a location of at least one alignment marker block in the to-be-generated code block set, a location of the at least one pad block in the to-be-generated code block set, and the location of the at least one overhead block in the to-be-generated code block set.

It can be learned that, in general, the foregoing processing manner of the AM block, the PAD block, and the OH block in embodiments of this disclosure may be understood as performing forward payload (payload) calculation, and then perform restoration from a relative location to an absolute location in a reverse direction. Specifically, in step 1, in embodiments of this disclosure, an AM overhead location may be first calculated by using an AM window, and an AM payload (to be specific, a current payload obtained by removing the AM overhead) is obtained. In step 2, in embodiments of this disclosure, a relative location of a PAD overhead may be found based on the AM payload, and a quantity of current PAD overheads is removed, to obtain a PAD payload. In step 3, in embodiments of this disclosure, a relative location of an OH overhead may be found based on the PAD payload. In step 4, in embodiments of this disclosure, a relative location of the AM payload may be restored based on the relative location of the OH (a location of a length of the pad payload), and a transition OH overhead location is generated. In step 5, in embodiments of this disclosure, the PAD overhead may be restored to an absolute location of DW based on the location of the AM payload (a location of a length of the AM payload). In step 6, in embodiments of this disclosure, the OH overhead may be restored to the absolute location of the DW based on the transition location restored in step 4, that is, the relative location of the AM payload (the location of the length of the AM payload).

In the foregoing manner, in embodiments of this disclosure, FlexE calculation complexity can be greatly reduced, this solution does not depend on a quantity of egress data buses, analysis and traversal are performed without depending on an AM/PAD/OH window calculation coupling scenario, and one set of algorithms are used for all data bus processing, simplifying overhead processing at a FlexE PHY layer. According to embodiments of this disclosure, bonding of FlexE PHYs of a same type can also be greatly improved, and flexibility of PHY grouping can be improved. A bandwidth is calculated accurately to ensure that no data is lost and to support any data bus egress requirements. In addition, FlexE protocol evolution is supported to improve inheritance of product development.

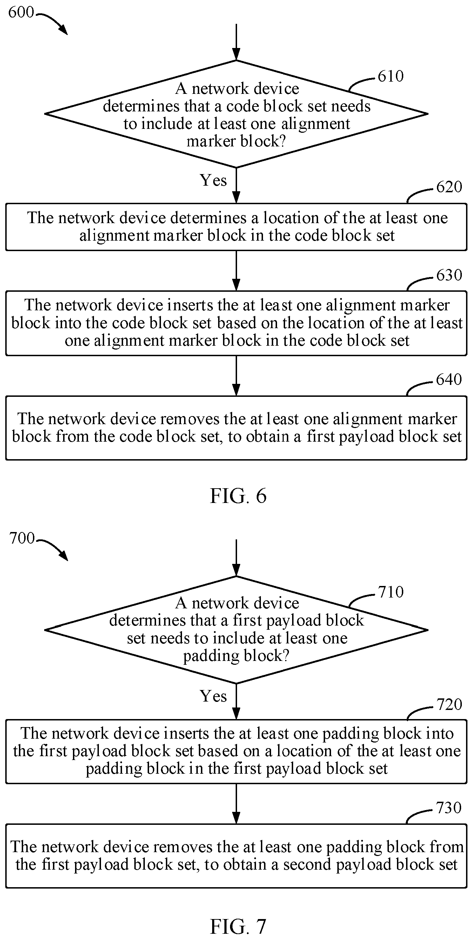

FIG. 6 is a flowchart of an example method 600 for obtaining a first payload block set by a network device after an alignment marker block is removed according to an embodiment of this disclosure. It should be noted that the example method 600 may be further performed based on the example method 200. In some embodiments, the example method 600 may be implemented by the network device 102 in FIG. 1C and FIG. 1D, for example, may be implemented by a processor or a processing unit of the network device 102 in cooperation with another component (for example, a memory). In other embodiments, the example method 600 may alternatively be implemented by another FlexE device. For ease of description, the example method 600 is described by using an example in which the network device 102 performs the example method 600.

At a block 610, the network device 102 may determine whether the code block set needs to include at least one alignment marker block. In some embodiments, the at least one alignment marker block may include a currently determined alignment marker block or a previously residual alignment marker block. If the network device 102 determines that the code block set needs to include the at least one alignment marker block, at a block 620, the network device 102 may determine a location of the at least one alignment marker block in the code block set. In another aspect, at the block 610, if the network device 102 determines that the code block set does not need to include the at least one alignment marker block, the network device 102 may skip the block 620 to a block 640 in FIG. 6, and continue to perform actions described in another embodiment of this disclosure. In addition, if the network device 102 determines that the code block set does not need to include the alignment marker block, the network device 102 may directly determine the to-be-generated code block set as the first payload block set, in other words, consider all code blocks in the to-be-generated code block set as a payload block set used for determining a PAD block. At a block 630, the network device 102 may insert the at least one alignment marker block into the code block set based on the location of the at least one alignment marker block in the code block set. At a block 640, the network device 102 removes the at least one alignment marker block from the code block set, to obtain the first payload block set.

FIG. 7 is a flowchart of an example method 700 for obtaining a second payload block set by a network device after a pad block is removed according to an embodiment of this disclosure. It should be noted that the example method 700 may be further performed based on the example method 400. In some embodiments, the example method 700 may be implemented by the network device 102 in FIG. 1C and FIG. 1D, for example, may be implemented by a processor or a processing unit of the network device 102 in cooperation with another component (for example, a memory). In other embodiments, the example method 700 may alternatively be implemented by another FlexE device. For ease of description, the example method 700 is described by using an example in which the network device 102 performs the example method 700.

At a block 710, the network device 102 may determine whether the first payload block set needs to include the at least one pad block. In some embodiments, the at least one pad block may include a currently determined pad block or a previously residual pad block. If the network device 102 determines that the first payload block set needs to include the at least one pad block, at a block 720, the network device 102 may insert the at least one pad block into the first payload block set based on a location of the at least one pad block in the first payload block set. In another aspect, at the block 710, if the network device 102 determines that the first payload block set does not need to include the at least one pad block, the network device 102 may skip the block 720 and a block 730 in FIG. 7, and continue to perform actions described in another embodiment of this disclosure. In addition, if the network device 102 determines that the first payload block set does not need to include the pad block, the network device 102 may determine the first payload block set as the second payload block set, in other words, consider a payload block set used for determining a PAD block as a payload block set used for determining an OH block. At the block 730, the network device 102 may remove the at least one pad block from the first payload block set, to obtain the second payload block set.

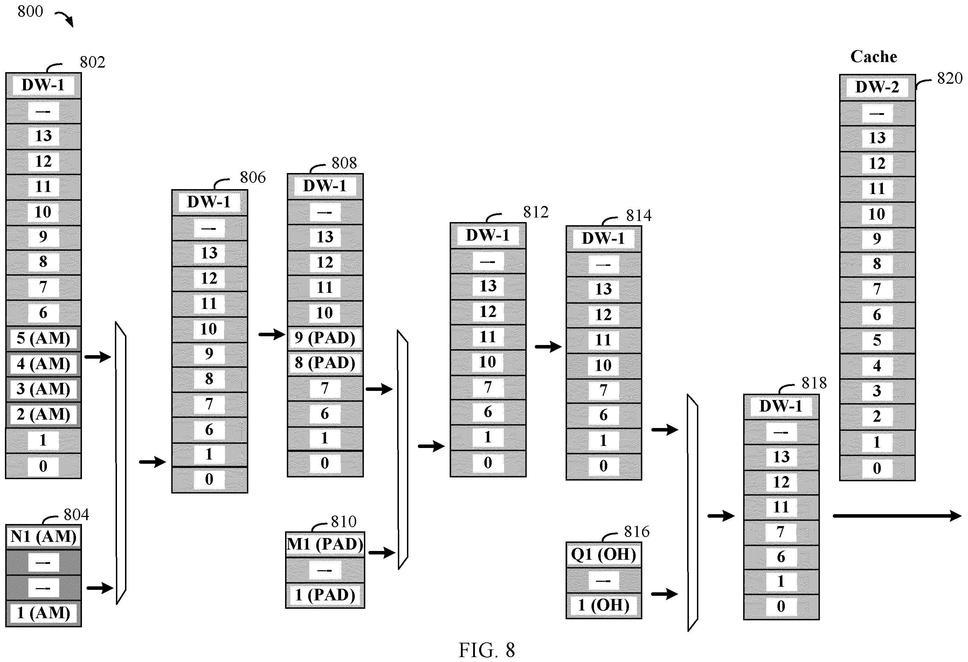

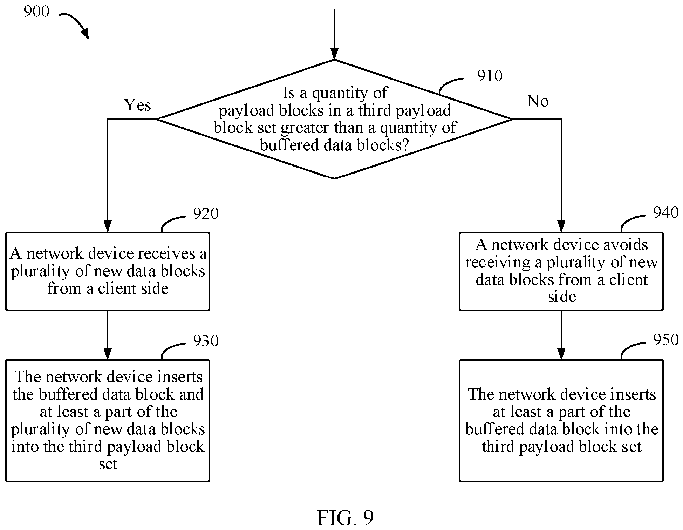

FIG. 8 is a diagram of an example process 800 of calculating a data bandwidth according to an embodiment of this disclosure. As shown in FIG. 8, this embodiment of this disclosure provides a FlexE data bandwidth calculation manner based on the overhead processing manner described above. In step 1, a network device 102 may obtain an AM overhead or a previously residual AM overhead from an AM window, to calculate an AM payload AM payload obtained by removing the AM overhead. In step 2, on the basis of the AM payload, the network device 102 may obtain a PAD overhead or a previously residual PAD overhead based on a PAD window, to calculate an overhead after the PAD is removed, to obtain a PAD payload PAD payload. In step 3, on the basis of the PAD payload, the network device 102 may obtain an OH overhead or a previously residual OH overhead based on an OH window, to calculate an OH payload OH payload obtained by removing the OH overhead. In step 4, the network device 102 may compare the OH payload with buffered data. The comparison may include two cases: When the OH payload is greater than the buffered data, the network device 102 may allocate a bandwidth to a client, read the buffered data and client data, where the total quantity of pieces of the read buffered data and client data is the OH payload, and store remaining data in a buffer. When the OH payload is less than or equal to a quantity of pieces of buffered data, the network device 102 may not allocate a bandwidth to a client, and only needs to read a quantity OH payload of pieces of data from the buffer. The following describes a process of the comparison in detail with reference to FIG. 9.

FIG. 9 is a flowchart of an example method 900 of comparing a quantity of payload blocks with a quantity of buffered data blocks by a network device according to an embodiment of this disclosure. It should be noted that the example method 900 may be further performed based on the example method 400. In some embodiments, the example method 900 may be implemented by the network device 102 in FIG. 1C and FIG. 1D, for example, may be implemented by a processor or a processing unit of the network device 102 in cooperation with another component (for example, a memory). In other embodiments, the example method 900 may alternatively be implemented by another FlexE device. For ease of description, the example method 900 is described by using an example in which the network device 102 performs the example method 900.

Before the example method 900, after the example method 400 is performed, the network device 102 may determine, based on the second payload block set, a corresponding third payload block set obtained by removing the overhead block from the second payload block set. As used in this specification, the third payload block set may be a payload block set obtained by removing the AM block, the PAD block, and the OH block. In some embodiments, the overhead block may include a currently determined overhead block or a previously residual overhead block.

Then, the network device 102 may perform the example method 900. At a block 910, the network device 102 may determine whether a quantity of payload blocks in the third payload block set is greater than a quantity of buffered data blocks. If the network device 102 determines that the quantity of payload blocks in the third payload block set is greater than a quantity of buffered data blocks, at a block 920, the network device 102 may receive a plurality of new data blocks from a client. Then, at a block 930, the network device 102 may insert the buffered data block and at least a part of the plurality of new data blocks into the third payload block set. In some embodiments, if the network device 102 determines that a remaining part of the new data blocks is not inserted into the third payload block set, the network device 102 may store the remaining part in a buffer. In another aspect, at the block 910, if the network device 102 determines that the quantity of payload blocks in the third payload block set is less than or equal to the quantity of buffered data blocks, at a block 940, the network device 102 may skip receiving a plurality of new data blocks from a client. Then, at a block 950, the network device 102 may insert at least a part of the buffered data block into the third payload block set.

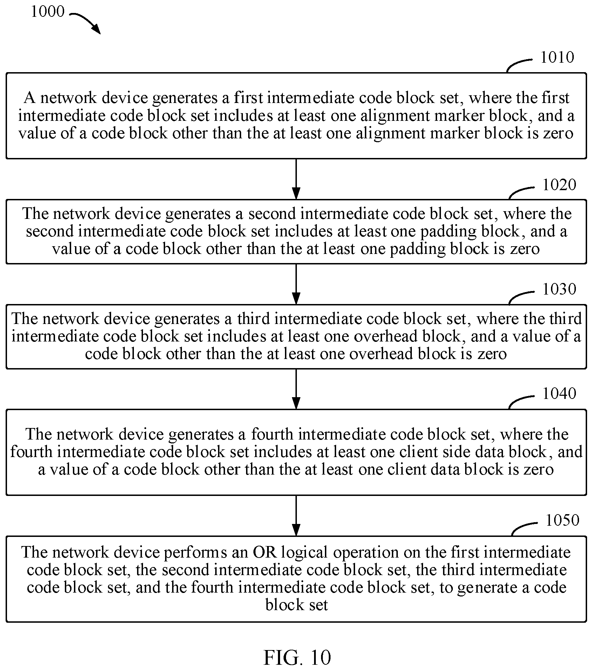

FIG. 10 is a flowchart of an example method 1000 for generating a code block set by a network device according to an embodiment of this disclosure. It should be noted that the example method 1000 may be further performed based on the example method 200 or 400. In some embodiments, the example method 1000 may be implemented by the network device 102 in FIG. 1C and FIG. 1D, for example, may be implemented by a processor or a processing unit of the network device 102 in cooperation with another component (for example, a memory). In other embodiments, the example method 1000 may alternatively be implemented by another FlexE device. For ease of description, the example method 1000 is described by using an example in which the network device 102 performs the example method 1000.

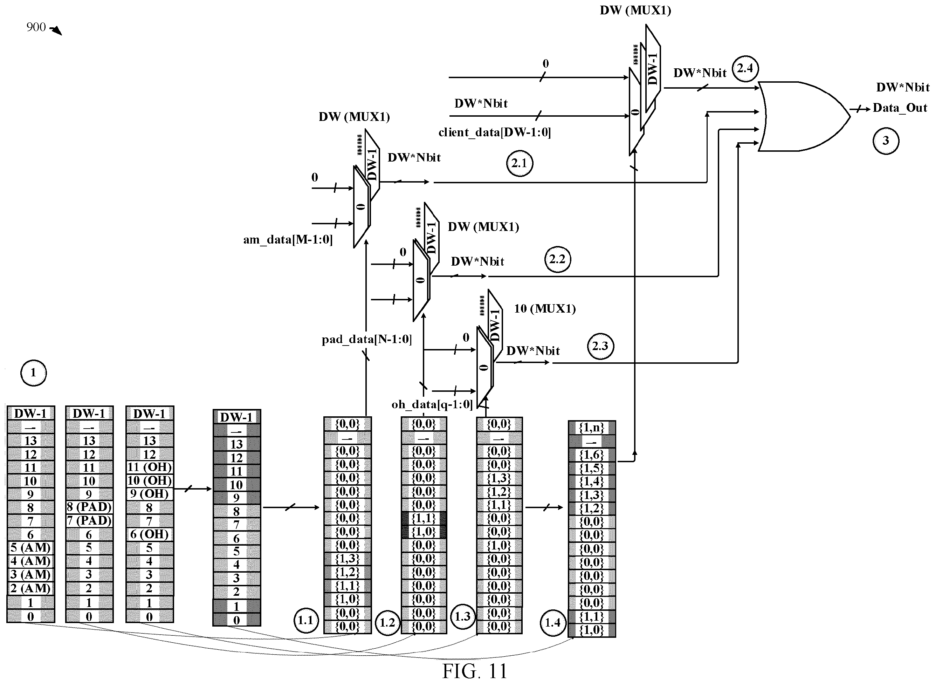

As shown in FIG. 10, at a block 1010, the network device 102 may generate a first intermediate code block set, where the first intermediate code block set includes the at least one alignment marker block, and a value of a code block other than the at least one alignment marker block is zero. At a block 1020, the network device 102 may generate a second intermediate code block set, where the second intermediate code block set includes the at least one pad block, and a value of a code block other than the at least one pad block is zero. At a block 1030, the network device 102 may generate a third intermediate code block set, where the third intermediate code block set includes the at least one overhead block, and a value of a code block other than the at least one overhead block is zero. At a block 1040, the network device 102 may generate a fourth intermediate code block set, where the fourth intermediate code block set includes at least one client data block, and a value of a code block other than the at least one client data block is zero. At a block 1050, the network device 102 may perform an OR logical operation on the first intermediate code block set, the second intermediate code block set, the third intermediate code block set, and the fourth intermediate code block set, to generate the code block set. A circuit implementation of the example method 1000 is described below with reference to FIG. 11.

FIG. 11 is a diagram of an example process 1100 of generating egress data by a network device according to an embodiment of this disclosure. As shown in FIG. 11, for insertion of a FLEXE PHY AM/PAD/OH overhead, it can be found, by summarizing a FlexE egress, that there are four data sources, to be specific, an AM overhead, a PAD overhead, an OH overhead, and CLIENT data. Therefore, a basic idea may be "Insertion is performed based on an index number". In step 1, a network device 102 may calculate indexes of data arrays of data corresponding to overheads, to be specific, an index number of an AM data array corresponding to a location at which an AM is to be inserted, and the index number identifies whether the AM is inserted at the corresponding location; an index number of a PAD data array corresponding to a location at which a PAD is to be inserted, and the index number identifies whether a PAD is inserted at the corresponding location; and an index number of an OH data array corresponding to a location at which an OH is to be inserted, and the index number identifies whether an OH is inserted at the corresponding location. The rest is a location of client data, and an index number of the data array is calculated. In step 2, the network device 102 may index AM data based on an AM identifier, and a value of another location is 0, index PAD data based on a PAD identifier, and a value of another location is 0, index OH data based on an OH identifier, and a value of another location is 0, and index DATA data based on a DATA identifier, and a value of another location is 0. In step 3, the network device 102 may combine the four groups of data into FlexE PHY egress data. It can be learned that, this embodiment of this disclosure provides normalization processing in which MUX of FLEXE PHY AM/PAD/OH/DATA is not limited by a data type and a PHY type, and supports coverage of a FlexE protocol evolution calculation manner.

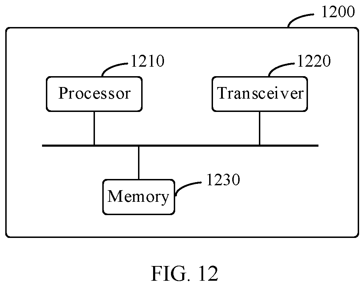

FIG. 12 is a simplified block diagram of a device 1200 suitable for implementing an embodiment of this disclosure. For example, the device 1200 may be used in the network architecture shown in FIG. 1C or FIG. 1D, and is configured to implement the network device 102 or 104, to perform operations performed by the network device 102 in the method 200, the method 400, the method 600, the method 700, the method 900, or the method 1000. The device 1200 may be, for example, the network device 102 in the network architecture shown in FIG. 1C or FIG. 1D, or may be a line card or a chip that implements a related function. As shown in FIG. 12, the device 1200 includes a transceiver 1220, a processor 1210 coupled to the transceiver 1220, and a memory 1230. The transceiver 1220 is specifically configured to perform an information receiving or sending operation performed by the network device 102 in the method 200, the method 400, the method 600, the method 700, the method 900, or the method 1000. The processor 1210 is configured to perform other processing or operations, other than receiving or sending information, performed by the network device 102 in the method 200, the method 400, the method 600, the method 700, the method 900, or the method 1000. The memory 1230 is configured to store FlexE data or any other data that is received by the network device 102 by using the FlexE group in the method 200, the method 400, the method 600, the method 700, the method 900, or the method 1000.

In some embodiments, the transceiver 1220 may be one interface, or may be a plurality of logically bonding interfaces. The interface may be, for example, an interface between a PHY layer and a transmission medium layer, such as a medium dependent interface (medium dependent interface, MDI). For example, the interface may alternatively be a physical interface of the network device. In some embodiments, the processor 1210 may be an application-specific integrated circuit (English: application-specific integrated circuit, ASIC for short), a programmable logic device (English: programmable logic device, PLD for short), or a combination thereof. The PLD may be a complex programmable logical device (English: complex programmable logic device, CPLD for short), a field-programmable gate array (English: field-programmable gate array, FPGA for short), a generic array logic (English: generic array logic, GAL for short), or any combination thereof. In some embodiments, the processor 1210 may alternatively be a central processing unit (English: central processing unit, CPU for short), a network processor (English: network processor, NP for short), or a combination of a CPU and an NP. In some embodiments, the processor 1210 may be one processor, or may include a plurality of processors. In some embodiments, the memory 1230 may include a volatile memory (English: volatile memory), for example, a random-access memory (English: random-access memory, RAM for short). The memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). In some embodiments, the memory 820 may further include a combination of the foregoing types of memories. The memory 1230 described in this disclosure may be n independent memories. The n memories may alternatively be integrated into one or more memories. In this case, the memories may be understood as different storage areas in a corresponding memory.

In some embodiments, the transceiver 1220, the processor 1210, and the memory 1230 may be independent physical units. The processor 1210 and the memory 1230 may be integrated together and implemented by using hardware. In some embodiments, the transceiver 1220 may alternatively be integrated with the processor 1210 and the memory 1230, and is implemented by using hardware. The hardware may be, for example, an ASIC, a PLD, or a combination thereof. The PLD may be a CPLD, an FPGA, generic array logic GAL, or any combination thereof.

All or some of the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this disclosure are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

Usually, the various example embodiments of this disclosure may be implemented in hardware or dedicated circuits, software, logic, or any combination thereof. Some aspects may be implemented in hardware, while other aspects may be implemented in firmware or software that may be executed by a controller, a microprocessor, or another computing device. For example, in some embodiments, various examples (for example, a method, an apparatus, or a device) of this disclosure may be partially or all implemented on a computer-readable medium. When the aspects of embodiments of this disclosure are illustrated or described as block diagrams, or flowcharts, or represented using some other figures, it should be understood that the blocks, apparatuses, systems, technologies, or methods described herein may be implemented as non-limiting examples in hardware, software, firmware, dedicated circuits or logic, general-purpose hardware or controllers, or other computing devices, or some combination thereof.

The present disclosure further provides at least one computer program product stored on a non-transitory computer-readable storage medium. The computer program product includes computer-executable instructions. The computer-executable instructions, for example, are included in a program module executed in a component on a target physical or virtual processor, and are used to perform the example methods or example processes described above. In general, the program module may include a routine, a program, a library, an object, a class, a component, a data structure, and the like, and execute a specific task or implement a specific abstract data structure. In various embodiments, the functions of the program modules may be combined or split between the described program modules. The computer-executable instructions for the program module may be executed locally or in a distributed device. In the distributed device, the program module may be located in both a local storage medium and a remote storage medium.

Program code used to implement the methods of this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as an independent software package, partly on a computer and partly on a remote computer, or entirely on a remote computer or a server. In a context of this disclosure, the computer program code or related data may be carried by any appropriate carrier, so that a device, an apparatus, or a processor can perform various processes and operations described above. Examples of the carrier include a signal, a computer-readable medium, and the like.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this disclosure are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing relevant hardware. The program may be stored in a computer-readable storage medium. When the program is executed, the processes of the foregoing method embodiments may be performed. The foregoing storage medium includes any medium that can store program code, such as a ROM, a random-access memory RAM, a magnetic disk, or an optical disc. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any suitable combination thereof. More detailed examples of the machine-readable storage medium include an electrical connection with one or more wires, a portable computer disk, a hard disk, a random-access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof.

In addition, although the operations are described in a particular order, this should not be understood as requiring the operations to be completed in the particular order shown or in a sequential order, or performing all of the illustrated operations to obtain a desired result. In some cases, multitasking or parallel processing is beneficial. Similarly, while the foregoing descriptions include some specific implementation details, this should not be construed as limitations on the scope of any invention or claims, but rather as descriptions of specific embodiments that may be specific to a specific invention. Some features described in this specification in the context of separate embodiments may alternatively be integrated into a single embodiment. Conversely, various features that are described in the context of a single embodiment may alternatively be implemented separately in a plurality of embodiments or in any suitable sub-combination.

Although the subject matter is described in language specific to structural features and/or methodological actions, it should be understood that the subject matter defined in the appended claims is not limited to the specific features or actions described above. Rather, the specific features and actions described above are disclosed as example forms of implementing the claims. The various examples and processes described above may be used independently of each other, or may be combined in various manners. Different combinations and sub-combinations are intended to fall within the scope of this disclosure, and some steps or processes may be omitted in some implementations. The foregoing descriptions are merely specific implementations of embodiments of this disclosure, but are not intended to limit the protection scope of embodiments of this disclosure. Any variation or replacement within the technical scope disclosed in embodiments of this disclosure shall fall within the protection scope of embodiments of this disclosure. Therefore, the protection scope of embodiments of this disclosure shall be subject to the protection scope of the claims.

## Claims

1. A method for flexible Ethernet FlexE, comprising:
determining, by a network device for a to-be-generated code block set, a corresponding first payload block set obtained by removing an alignment marker block from the code block set;
if the network device determines that the first payload block set needs to comprise a pad block, determining, by the network device, a location of the pad block in the first payload block set; and
determining, by the network device, a location of the pad block in the code block set based on the location of the pad block in the first payload block set.

2. The method according to claim 1, further comprising:
determining, by the network device based on the first payload block set, a corresponding second payload block set obtained by removing the pad block from the first payload block set;
if the network device determines that the second payload block set needs to comprise an overhead block, determining, by the network device, a location of the overhead block in the second payload block set; and
determining, by the network device, a location of the overhead block in the code block set based on the location of the overhead block in the second payload block set.

3. The method according to claim 2, wherein the determining a location of the overhead block in the code block set comprises:
determining, by the network device, a location of the overhead block in the first payload block set based on the location of the overhead block in the second payload block set; and
determining, by the network device, the location of the overhead block in the code block set based on the location of the overhead block in the first payload block set.

4. The method according to any one of claims 1 to 3, wherein the determining a first payload block set comprises:
if the network device determines that the code block set needs to comprise the at least one alignment marker block, determining, by the network device, a location of the at least one alignment marker block in the code block set;
inserting, by the network device, the at least one alignment marker block into the code block set based on the location of the at least one alignment marker block in the code block set; and
removing, by the network device, the at least one alignment marker block from the code block set, to obtain the first payload block set.

5. The method according to claim 4, wherein the at least one alignment marker block comprises a currently determined alignment marker block or a previously residual alignment marker block.

6. The method according to any one of claims 1 to 5, wherein the determining a first payload block set comprises:
if the network device determines that the code block set does not need to comprise the alignment marker block, determining, by the network device, the code block set as the first payload block set.

7. The method according to claim 2, wherein the determining a second payload block set comprises:
if the network device determines that the first payload block set needs to comprise the at least one pad block, inserting, by the network device, the at least one pad block into the first payload block set based on the location of the at least one pad block in the first payload block set; and
removing, by the network device, the at least one pad block from the first payload block set, to obtain the second payload block set.

8. The method according to claim 7, wherein the at least one pad block comprises a currently determined pad block or a previously residual pad block.

9. The method according to claim 2, wherein the determining a second payload block set comprises:
if the network device determines that the first payload block set does not need to comprise the pad block, determining, by the network device, the first payload block set as the second payload block set.

10. The method according to any one of claims 1 to 9, wherein the determining a location of the pad block in the first payload block set comprises:
determining, by the network device in the first payload block set, a quantity of payload blocks before the pad block.

11. The method according to claim 10, wherein the determining a location of the pad block in the code block set comprises:
determining, by the network device, the location of the pad block in the code block set based on the quantity of payload blocks before the pad block.

12. The method according to claim 2, further comprising:
determining, by the network device based on the second payload block set, a corresponding third payload block set obtained by removing the overhead block from the second payload block set.

13. The method according to claim 12, wherein the overhead block comprises a currently determined overhead block or a previously residual overhead block.

14. The method according to claim 12, further comprising:
if the network device determines that a quantity of payload blocks in the third payload block set is greater than a quantity of buffered data blocks, receiving, by the network device, a plurality of new data blocks from a client; and
inserting, by the network device, the buffered data block and at least a part of the plurality of new data blocks into the third payload block set.

15. The method according to claim 14, further comprising:
if the network device determines that a remaining part of the new data blocks is not inserted into the third payload block set, storing, by the network device, the remaining part in a buffer.

16. The method according to claim 12, further comprising:
if the network device determines that a quantity of payload blocks in the third payload block set is less than or equal to a quantity of buffered data blocks, skipping, by the network device, receiving a plurality of new data blocks from a client; and
inserting, by the network device, at least a part of the buffered data block into the third payload block set.

17. The method according to any one of claims 1 to 16, further comprising:
generating, by the network device, the code block set based on the location of the at least one alignment marker block in the code block set, the location of the at least one pad block in the code block set, and the location of the at least one overhead block in the code block set.

18. The method according to claim 17, wherein generating the code block set comprises:
generating, by the network device, a first intermediate code block set, wherein the first intermediate code block set comprises the at least one alignment marker block, and a value of a code block other than the at least one alignment marker block is zero;
generating, by the network device, a second intermediate code block set, wherein the second intermediate code block set comprises the at least one pad block, and a value of a code block other than the at least one pad block is zero;
generating, by the network device, a third intermediate code block set, wherein the third intermediate code block set comprises the at least one overhead block, and a value of a code block other than the at least one overhead block is zero;
generating, by the network device, a fourth intermediate code block set, wherein the fourth intermediate code block set comprises at least one client data block, and a value of a code block other than the at least one client data block is zero; and
performing, by the network device, an OR logical operation on the first intermediate code block set, the second intermediate code block set, the third intermediate code block set, and the fourth intermediate code block set, to generate the code block set.

19. A network device, comprising a processor and a memory storing instructions, wherein when the instructions are executed by the processor, the network device is enabled to perform the method according to any one of claims 1 to 18.

20. A computer-readable storage medium, wherein the computer-readable storage medium stores instructions, and when the instructions are executed by an electronic device, the electronic device is enabled to perform the method according to any one of claims 1 to 18.

21. A computer program product, wherein the computer program product comprises instructions, and when the instructions are executed by an electronic device, the electronic device is enabled to perform the method according to any one of claims 1 to 18.
